# EUROPEAN PATENT SPECIFICATION

(11) **EP 1 341 120 B1**
(45) Date of publication and mention of the grant of the patent: **15.02.2012**
(21) Application number: 03251182.6
(22) Date of filing: 27.02.2003
(51) Int. Cl.: G06K 15/02

(54) **Detecting blank compressed bitmaps in an image output process**
Festellung von leeren, komprimierten Bitmap-Bildern in einem Bilderzeugungsverfahren
Detection de matrices de points comprimées vierges dans un processus de sortie d'images

(30) Priority: 27.02.2002 JP 2002051660; 25.03.2002 JP 2002082431; 29.11.2002 JP 2002347920; 30.01.2003 JP 2003022739
(43) Date of publication of application: 03.09.2003
(73) Proprietor: Ricoh Company, Ltd., Tokyo 143-8555 (JP)
(72) Inventor: Nishiwaki, Hirofumi, Ohta-ku, Tokyo 143-8555 (JP); Inoue, Yoshiya, Ohta-ku, Tokyo 143-8555 (JP)
(74) Representative: Leeming, John Gerard

(56) References cited:
- JP-A- 2000 168 170
- JP-A- 2000 259 386
- JP-A- 2000 299 758

## Description

The present invention relates to an image formation apparatus and method and an image formation program capable of deciding whether an output state of image data to be output is in a blank state, and a charge counting device, a charging method, and a charging program that carry out a charge processing based on a result of the decision made about whether the output of the image data is in the blank state.

Printing is carried out by an image formation apparatus based on an electrophotographic process in such a manner that image data generated by a host computer is bitmapped to obtain bitmap data for one plane of black color K for monochrome printing or for four planes of cyan, magenta, yellow, and black (C, M, Y, and K) at maximum depending on the need for color printing. The image formation apparatus draws one plane or respective planes of specific colors of the bitmap data by starting the printing process.

When the host computer generates image data, and when bitmapping the image data to obtain bitmap data and outputting the bitmap data, the image formation apparatus detects presence or absence of respective colors of which image is to be drawn. The image-formation apparatus then controls outputting of color bitmap data not drawn, starting of the printing process, measuring of a number of times of drawing for each color, and measuring of a number of sheets of paper to be printed, respectively. When the bitmap data is generated by bitmapping the image data, plane bits with no drawing dots (i.e., a white plane) are produced because of various factors such as clipping or masking of a specified area, and dithering or gamma conversion depending on the density of the printing data, and therefore the image formation apparatus in some cases draws an unnecessary plane.

There is a unit that detects the white plane by tracing bits on each plane to detect presence or absence of drawing dots. However, this operation is very inefficient in the environment of pursuing a higher-speed printing in order to obtain higher efficiency. While the memory space is in a decreasing trend to lower the cost, a method of increasing the memory-utilization efficiency by compressing the bit-mapped data has been generally employed in order to secure higher throughput.

For example, in order to increase the printing speed and secure higher efficiency, a printer described in Japanese Patent Application Laid-Open No. 2001-96816, receives data of each color component in units of one lines from a high-order device, and stores the data in a receiving buffer. A rendering circuit collectively reads data of each color component by a plurality of pixel components from the receiving buffer. With this arrangement, the host computer does not transmit data of four colors pixel by pixel but transmits the data line by line for each colour to the printer. Therefore, the number of accesses by the receiving buffer at the printer side is reduced and a processing speed is increased.

According to the conventional system, plain bitmap data having no drawing dots, i,e., a white plane, occurs. It is not possible to efficiently detect this white plane. The system compares all pixels of bitmap data (in a page unit) obtained by bitmapping image data stored in the image memory of the printer with pixels of the white plane. When it is confirmed that all the bitmap data are white (i.e., the relevant page is not printed on paper, that is, a blank sheet of paper), a charge counter is not counted.

However, according to this system, a recent high-resolution printer that can print 1,200 DPI requires a memory space of 34 MB in order to print out an A3-sized image. If comparing all the pixels of the bitmap data with the pixels of the white plane, the printer requires a large amount of operation for the comparison. This lowers the printing performance of the printer.

JP-A-2000-168, 170 discloses a blank paper detecting apparatus which detects blank pages or blank bands by analysing the compressed data by algorithm or comparing it with blank page compressed data or blank band compressed data held in a ROM.

JP-A-2000-299,758 discloses a method of detecting white pages in scanned data by measuring the data quantity corresponding to each page.

The present invention has been achieved in order to solve the above problems. It is an object of this invention to provide an image formation apparatus and method, and an image formation program capable of efficiently and easily detecting whether an output of image data is in a blank state and improving the efficiency and performance of the printing. According to this invention, there is provided an image formation apparatus, an image formation method and an image formation program as defined in the appended claims.

These and other objects, features and advantages of the present invention are specifically set forth in or will become apparent from the following detailed descriptions of the invention when read in conjunction with the accompanying drawings, in which:
Fig. 1 shows a block diagram of a functional configuration of a printer according to a first embodiment of the present invention,
Fig. 2 shows a block diagram of a hardware configuration of the printer according to the first embodiment,
Fig. 3 shows a flowchart of a total flow of a printing processing performed by the printer,
Fig. 4 shows a flowchart of a procedure of a white plane decision processing performed by a white plane deciding section of the printer,
Fig. 5 shows a flowchart of a procedure of a task changing processing performed by a task scheduler of the printer,
Fig. 6 shows an example of a task management table 125 of the printer and an example of how a priority order is changed in this table,
Fig. 7 shows an outline structure of a printer engine of the printer that is a tandem full-color printer,
Fig. 8 shows a flowchart of another example of the procedure of the white plane decision processing performed by the white plane deciding section of the printer,
Fig. 9 shows a flowchart of another example of the procedure of the priority order changing processing performed by the task scheduler of the printer;
Fig. 10A shows a menu screen displayed on an operation panel, Fig. 10B shows a system setting screen, and Fig. 10C shows a performance setting screen,
Fig. 11 shows a flowchart of a procedure of a task changing processing performed by a task scheduler of a printer according to a second embodiment of the present invention,
Fig. 12 shows a block diagram of a functional configuration of a printer according to a third embodiment of the present invention,
Fig. 13 shows a flowchart of a procedure of a white plane decision processing performed by a white plane deciding section of the printer according to the third embodiment, and
Fig. 14 shows a flowchart of a procedure of a charge processing performed by a charging processing section of the printer according to the third embodiment.

Embodiments of the image formation apparatus and method, the charge counting device, the charging method, the image formation program, and the charging program according to the present invention are explained in detail below with reference to the accompanying drawings. In the following embodiments, the image formation apparatus according to the present invention is applied to a printer.

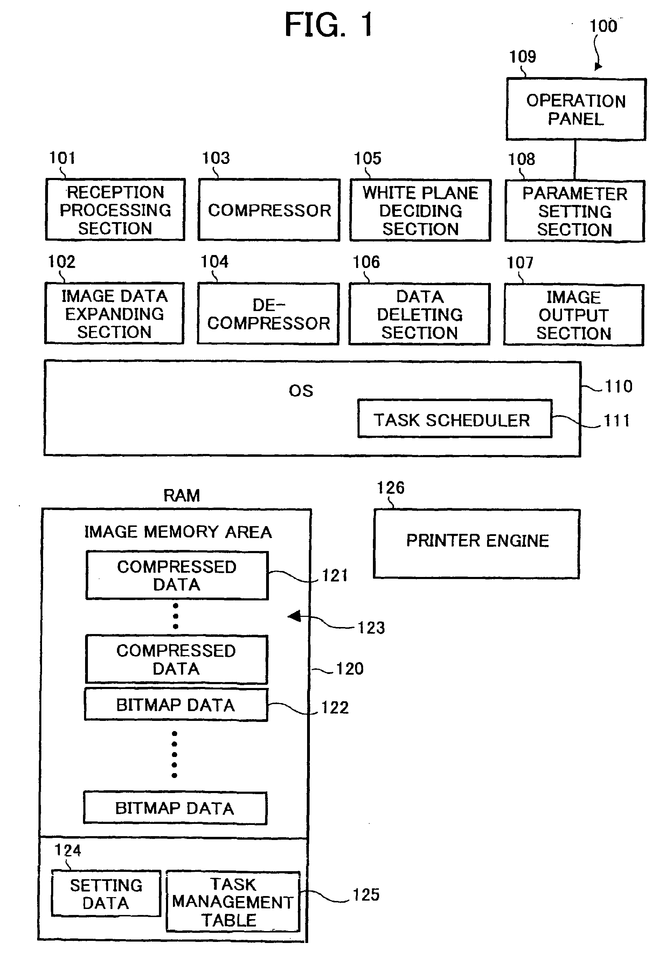

Fig. 1 shows a block diagram of a functional configuration of a printer according to a first embodiment of the present invention. As shown in Fig. 1, a printer 100 of the first embodiment has a software configuration that mainly includes a reception processing section 101, a image data expanding section 102, a compressor 103, a decompressor 104, a white plane deciding section 105, a data deleting section 106, an image output section 107, a parameter setting section 108, and an operation system (OS) 110 that controls the basic operation of the printer.

The printer 100 also has a hardware configuration that mainly includes an operation panel 109 as a user interface that allows a user to input a system setting relating to the printer 100, a random access memory (RAM) 120 that stores various kinds of data such as image data and setting data through the operation panel 109, and a printer engine 126.

The reception processing section 101 carries out a reception interrupt processing for receiving image data to be printed from the host computer and storing the received image data into an image memory area 123 (i.e., a reception buffer) of the RAM 120.

The image data expanding section 102 carries out a drawing processing of reading the image data to be printed that is stored in the image memory area 123, and expanding the read printing data into a bit map to generate bitmap data.

The compressor 103 compresses the bitmap data and stores the compressed data into the image memory area 123 of the RAM 120.

The white plane deciding section 105 decides whether bitmap data indicates a white plane based on presence or absence of drawing dots in the bitmap data determined by comparing a size of the compressed data with a minimum size of a compression algorithm converted from a size of the data before the compression.

The decompressor 104 decompresses the compressed data of a print-requested page to generate video data.

The data deleting section 106 deletes bitmap data of a page whose image is formed, transferred, and printed by the printer engine, working data, and compressed data, from the image memory area 123 of the RAM 120.

The image output section 107 outputs the generated video data for printing to the printer engine.

The parameter setting section 108 displays various kinds of screens on a liquid crystal display of the operation panel 109, receives a user's input through the operation panel 109, and stores the input data as setting data 124 into the RAM 120. The setting data 124 includes various kinds of data concerning system setting, performance setting, and mode setting.

The reception processing section 101, the image data expanding section 102, the compressor 103, the decompressor 104, the white plane deciding section 105, the data deleting section 106, the image output section 107, and the parameter setting section 108 execute their respective tasks (or processes) in parallel under the management of the OS 110.

In the OS 110, a task scheduler 111 operates to manage these tasks and change the priority order of the tasks. The task scheduler 111 constitutes a task managing unit in the present invention. The task scheduler 111 schedules each task according to the priority order stored in a task management table 125 held in the RAM 120 or the OS 110, and at the same time, manages the parallel execution of the tasks. Based on a result of a decision made about the existence of a white plane, the task scheduler 111 changes the priority order of the tasks in the task management table 125.

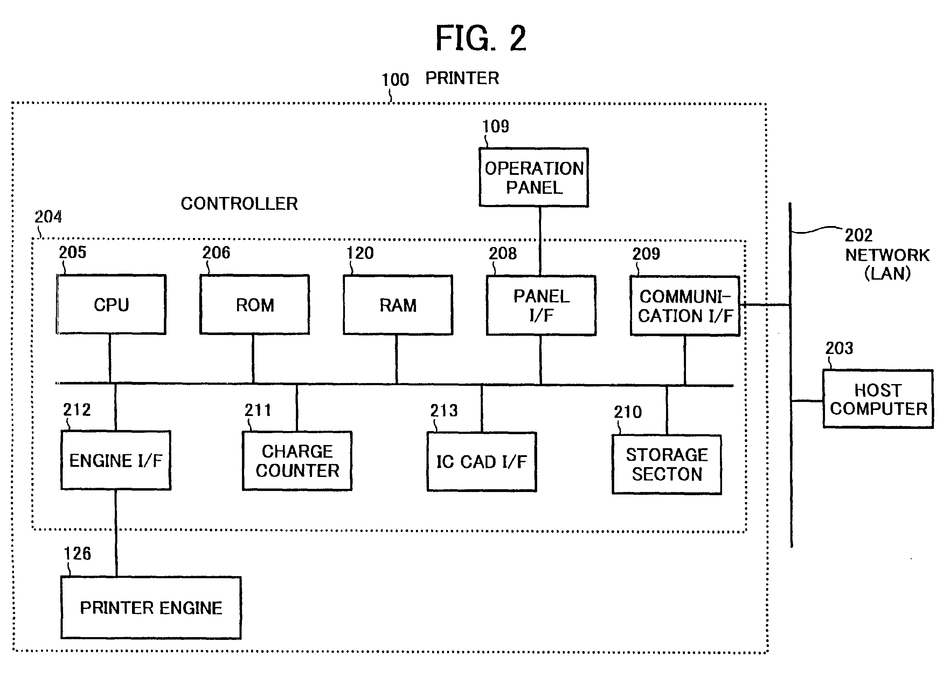

The image memory area 123 of the RAM 120 stores the image data transmitted from a host computer 203 shown in Fig. 2, the bitmap data obtained by bitmapping the image data, and the compressed data obtained by compressing the bitmap data. While the image memory area 123 is provided in the RAM 120 in the present embodiment, the image memory area 123 may be ensured in a hard disk (HD) unit to store the image data, the bitmap data, and the compressed data.

The operation panel 109 displays a state of the printer 100 for the user, and is used for the user to input instructions to the printer 100. The user also inputs the system setting and the performance setting to be described later through the operation panel 109.

Fig. 2 shows a block diagram of a hardware configuration of the printer 100 according to the first embodiment. As shown in Fig. 2, the printer 100 of the first embodiment is connected to the host computer 203 via a network 202 such as a LAN. The network 202 is not limited to the LAN, and the printer 100 and the host computer 203 may be connected to each other based on any kind of connection system. In other words, as a method of carrying out communications with the host computer 203 via a communication interface (I/F) 209, there are Centronics I/F and RS232C. In addition to these, a network such as EtherNet and LocalTalk may be used.

The host computer 203 has a role of transmitting the image data generated based on an application program to the printer 100, and issuing an instruction to the printer 100 to print the image data.

The printer 100 has a controller 204 inside. The controller 204 has a hardware configuration that includes a central processing unit (CPU) 205, a read-only memory (ROM) 206 that stores control programs of the controller 204 and font pattern data, the RAM 120 including a nonvolatile RAM (NVRAM), a panel interface (I/F) 208 connected to the operation panel 109, the communication I/F 209, a storage section 210 such as a hard disk (HD) unit, an IC card I/F 213, a charge counter 211, and an engine I/F 212 connected to the printer engine 126.

The printer 100 is connected with a storage or has the built-in storage section 210. It is possible to supply font data and a program to the storage section 210 from the outside via the IC card I/F 213.

The CPU 205 executes processing programs of the reception processing section 101 and the image data expanding section 102 stored in the ROM 206, and controls the operation of the printer 100.

The operation panel 109 is connected to the controller 204 via the panel I/F 208. The input to the parameter setting section 108 is carried out through the operation panel 109 via the panel I/F 208.

The charge counter 211 is a module that manages the charge counting, and the charge counter 211 constitutes a charge counting device in the present invention. The charge counter 211 may be configured with hardware or with software.

The engine I/F 212 communicates a command, a status, and printing data with the printer engine 126. The printer engine 126 actually prints the data on paper.

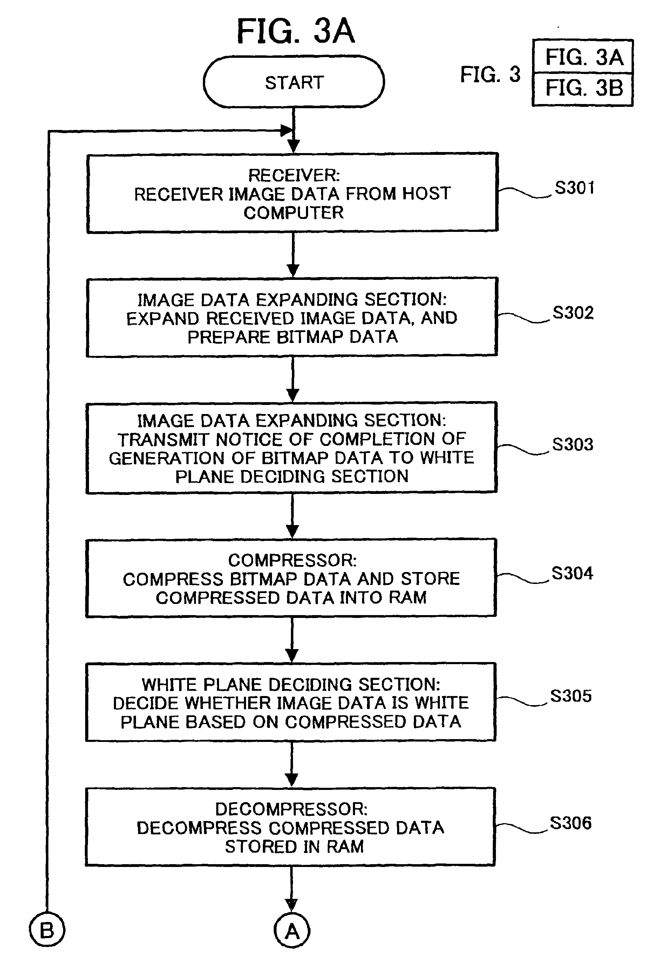

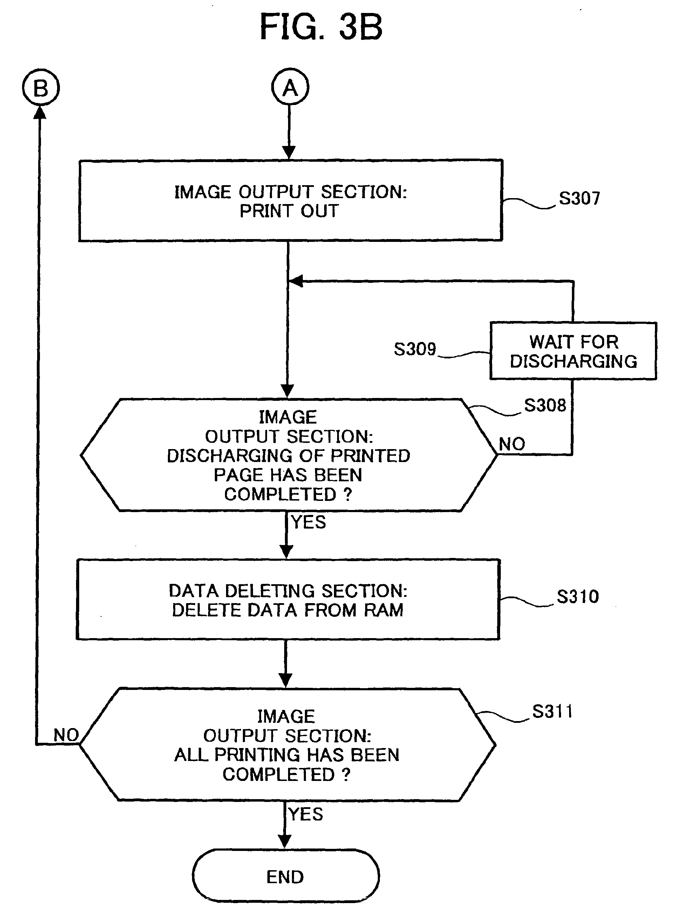

The printing processing performed by the printer 100 configured as explained above in the first embodiment is explained next. Fig. 3 shows a flowchart of a total flow of the printing processing performed by the printer 100.

When the image data to be printed is transmitted from the host computer 203, the reception processing section 101 is interrupted so as to receive the image data, and stores the received image data into the image memory area 123 (step S301). The image data transmitted from the host computer 203 may be bitmap data in some cases.

The image data expanding section 102 reads the image data to be printed that is stored in the image memory area 123, and expands the read image data into a bit map to generate bitmap data 122 (step S302). The image data expanding section 102 transmits a notice of completion of the generation of the bitmap data (i.e., a drawing processing completion notice) to the task (or the process) of the white plane deciding section 105 (step S303).

The compressor 103 compresses the bitmap data 122 stored in the image memory area 123 to generate compressed data 121, and stores the compressed data 121 into the image memory area 123 of the RAM 120 (step S304). In the first embodiment, the compression system is not particularly limited.

The white plane deciding section 105 decides whether drawing dots exist in the bitmap data 122 based on the compressed data 121, that is, whether the bitmap data 122 is white plane data (step S305). This decision processing is explained later.

When the white plane deciding section 105 has made a decision about a white plane, the decompressor 104 decompresses the compressed data 121, and generates video data to be transmitted to the printer engine 126 (step S306).

The image output section 107 transmits the generated video data to the printer engine 126, and the printer engine 126 prints out the video data (step S307). The image output section 107 checks whether discharging of a paper with a page printed thereon has been completed (step S308). When the discharging of the printed page has not been completed, the image output section 107 waits for the discharging of the paper with the page printed thereon (step S309).

When the discharging of the printed page has been completed, the data deleting section 106 deletes the image data, bitmap data, compressed data, and video data concerning the printed page, and all other working data stored in the image memory area 123 (step S310). The printer 100 carries out all the processing from step S301 to step S311 repeatedly for all the printed pages (step S311).

The printer 100 carries out a series of processing from step S301 to step S311 for each one page. However, when the image data of a second page and a third page are-received sequentially from the host computer, the printer 100 executes the series of processing to print the image data of the second page and the third page in parallel, without waiting for the completion of the series of processing for the first page. In this case, each section executes the processing according to the priority order set in advance in the task management table 125. This priority order is designed to avoid the data to be processed from being stuck, preferentially compress and store each plane whose bitmap data has been drawn, and preferentially decompress and print out the data for one page when the drawing, compression and storing of the one page component have been completed. The printer engine needs to print out the bitmap data in synchronism with the image formation by setting the priority of printing of the bitmap data higher than the priority of the reception processing, thereby avoiding a delay in the printing.

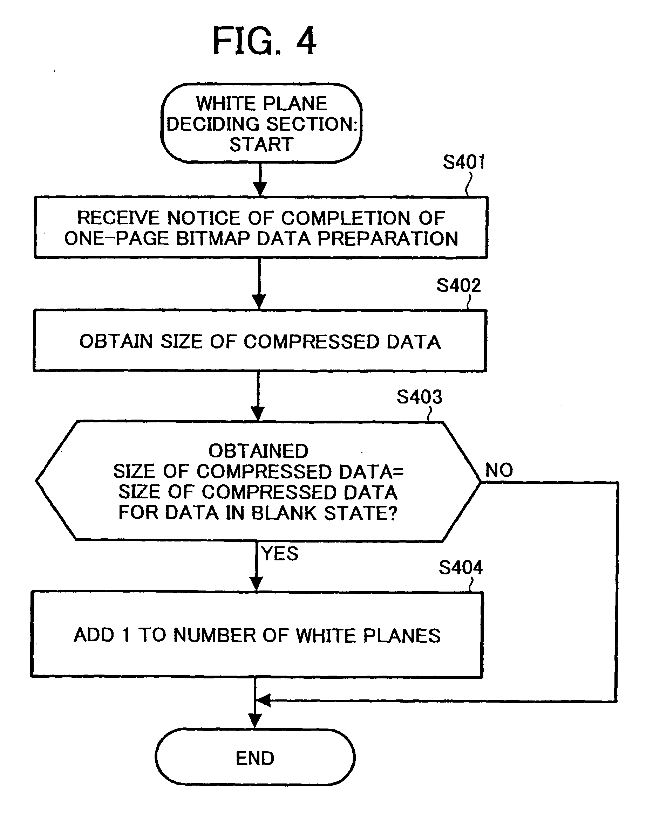

The white plane decision processing performed by the printer 100 of the first embodiment is explained below. Fig. 4 shows a flowchart of a procedure of the white plane decision processing performed by the white plane deciding section 105.

The white plane deciding section 105 receives a notice of the completion of the one-page bitmap data generation from the image data expanding section 102 (step S401), and obtains the size of the compressed data 121 of the image data stored in the image memory area 123 (step S402). The white plane deciding section 105 compares the size of the compressed data of the image data in a blank state with the size of the obtained compressed data 121 (step S403). In other words, the white plane deciding section 105 compares the size of the compressed data with the minimum size of a compression algorithm converted from the size of the data before the compression. The size of the compressed data in the blank state may be automatically generated at the time of the printing operation. Alternatively, this size may be prepared in advance before the printing operation, stored in the RAM 120 or the like, and retrieved from this RAM 120.

When both sizes are equal, the white plane deciding section 105 decides that the output image of the image data currently under the processing is a white plane in the blank state. The white plane deciding section 105 increases, by one, the number of white planes (where an initial value is zero) stored as global variables or stored as data in the RAM 120 (step S404). This number of white planes is referred to in the priority order changing processing to be described later. On the other hand, when the obtained size is not equal to the size of the compressed data of the image data in the blank state, the white plane deciding section 105 decides that the output image of the image data currently under the processing is not in the blank state, i.e., the output image is not a white plane. In this case, the white plane deciding section 105 does not increase the number of white planes.

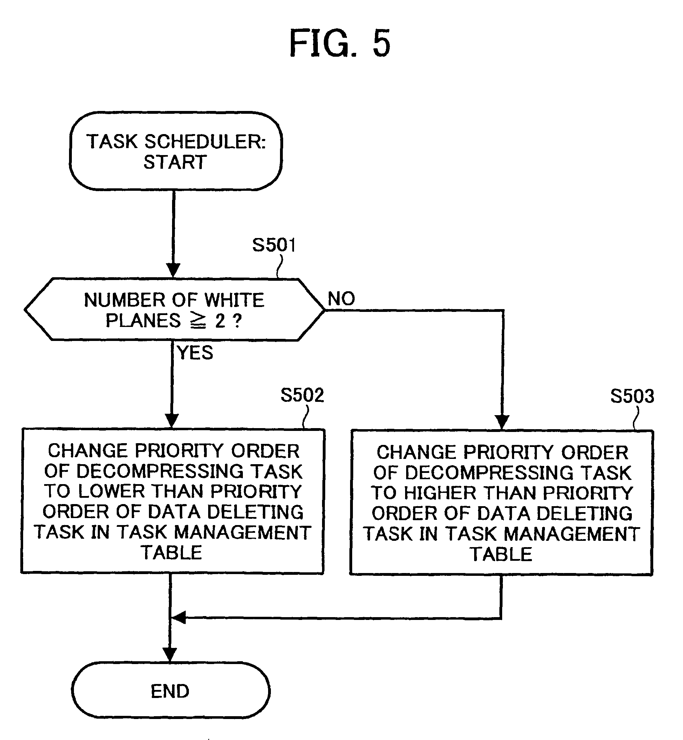

The task changing processing performed by the task scheduler 1111 based on a result of the decision made about a white plane is explained below. Fig. 5 shows a flowchart of a procedure of the task changing processing performed by the task scheduler 111.

The task scheduler 111 decides whether the number of white planes set by the white plane deciding section 105 is at least two (step S501). In other words, the task scheduler 111 decides whether pages requested to be output next have at least two white planes when several pages of image data transmitted from the host computer are subjected to sequential processing including the expansion, the compression, the decision making about a white plane having no drawing dots, the decompression, and the printing out.

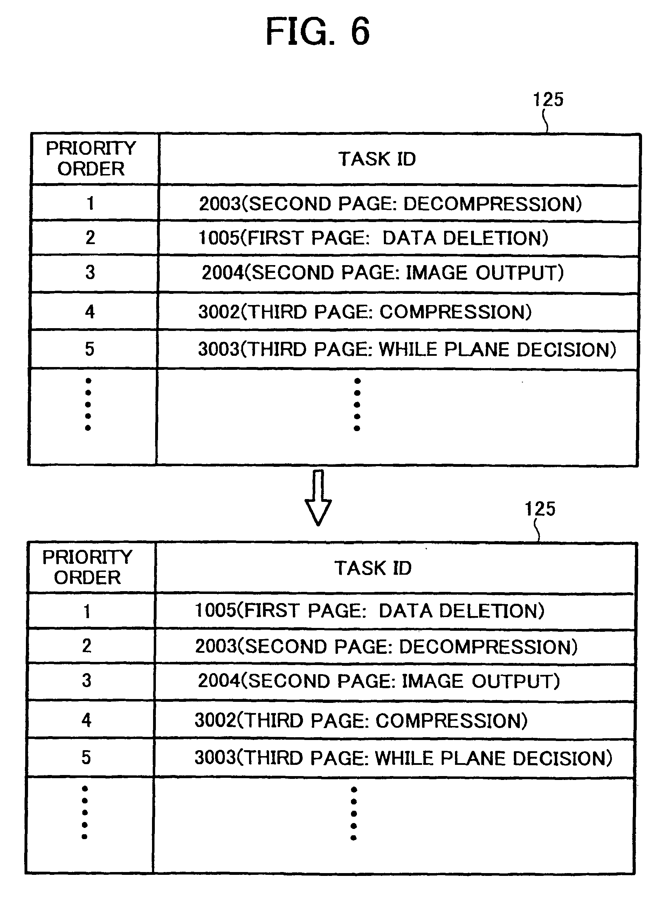

When there are at least two white planes, the task scheduler 111 changes the task management table 125 so as to set the priority order of the decompressing task to be lower than the priority order of the data deleting task (step S502). Fig. 6 shows an example of the task management table 125 and an example of a change in the priority order in this table. In the example shown in Fig. 6, the priority order of the decompressing task for the image data of the second page is changed so that the priority order is set to be lower than the priority order of the data deleting task of the image data of the first page.

On the other hand, when the number of white planes is smaller than two, that is, when the number of white planes in pages requested to be output next is smaller than two, the task scheduler 111 sets the priority order of the decompressing task to be higher than the priority order of the data deleting task (step S503).

Based on the above control, when there is a large number of white planes in pages requested to be output next, the number of planes to be decompressed is small. Therefore, the load of the decompressing task is light. Further, as the task of deleting the printed page has a high priority, this task is preferentially carried out. Consequently, it is possible to ensure at an early stage a memory that is necessary for the subsequent pages and improve the throughput.

In order to improve the printing efficiency based on the detection of white planes, the printer 100 of the first embodiment sets the priority order of the decompressing task to be lower than the priority order of the data deleting task when there are at least two white planes in pages requested to be output next. It is also possible to select either of changing the priority order of these processing tasks based on the number of white planes in pages requested to be output next or printing the planes without changing the priority orders If the printer 100 is so configured as explained above, the compression or decompression time varies depending on the drawn data. Therefore, by lowering the priority order of the decompressing task, it is possible to solve such a problem that a timing margin for decompression of the output pages with respect to a request to output bitmap data by the printer engine 126 is reduced or the decompression of the output pages cannot follow the requested output timing.

The printer 100 of the first embodiment is configured to change the priority order of the data deleting task and the priority order of the decompressing task based on the result of the decision on white planes. The printer 100 may also be configured to change the priority order of other tasks.

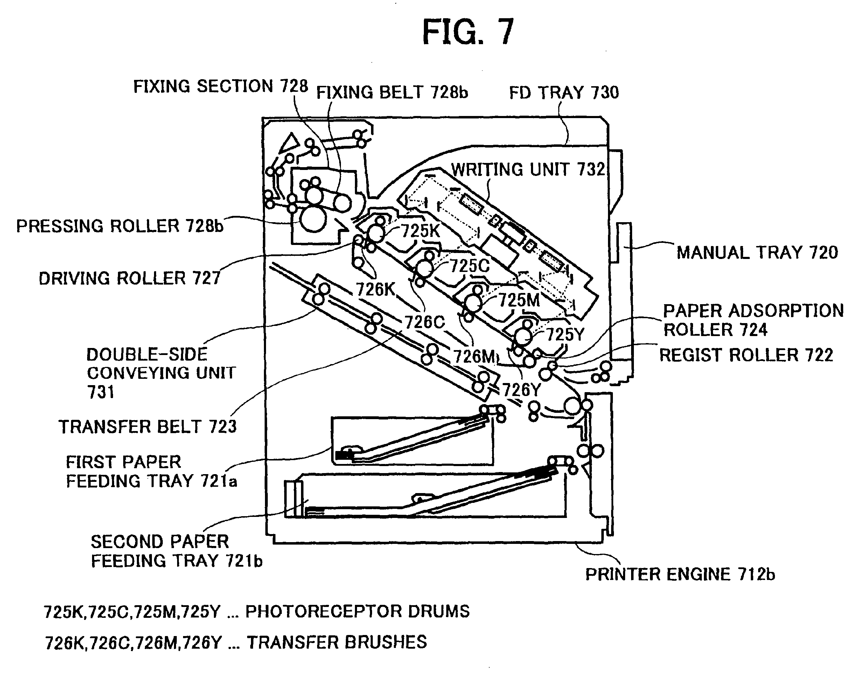

The printer engine 126 in the printer 100 of the first embodiment is explained below. Fig. 7 shows an outline structure of the printer engine 126, and the printer is a tandem full-color printer.

The color printer shown in Fig. 7 has three paper feeding trays: one manual tray 720 and two paper feeding cassettes (a first paper feeding tray 721a, and a second paper feeding tray 721b). When printing paper is fed from the manual tray, a paper feeding roller directly feeds this printing paper to regist rollers 722. Printing paper fed from any one of the first and second paper feeding trays 721 a and 721 b is conveyed by the paper feeding roller to the regist rollers 722 via an intermediate roller. A resist clutch (not shown) is turned on at the timing at which the image formed on the photoreceptor substantially coincides with the front end of the printing paper, and the printing paper is conveyed to a transfer belt 723. When the printing paper passes through a paper adsorption nip composed of the transfer belt 723 and a paper adsorption roller 724 that is in contact with the transfer belt 723, the printing paper is absorbed by the transfer belt 723 with bias applied to the paper adsorption roller 724 and is conveyed at a process linear velocity of 125 mm/sec.

There are transfer brushes 726K, 726C, 726M, and 726Y provided at positions facing photoreceptor drums of different colors 725K, 725C, 725M, and 725Y and the transfer belt 723 between these photoreceptor drums and the transfer brushes. A transfer bias (plus) having the opposite polarity to a charge polarity (minus) of a toner is applied to each transfer brush, and the toner image of each color generated on each of the photoreceptor drums 725K, 725C, 725M, and 725Y is sequentially transferred onto the printing paper adsorbed on the transfer belt 723 in the order of yellow, magenta, cyan, and black.

The printing paper onto which the colors are transferred is subjected to curvature separation from the transfer belt 723 by a driving roller 727 of a transfer belt unit, and is conveyed to a fixing section 728. When the printing paper passes through a fixing nip formed with a fixing belt 728a and a pressing roller 728b, the toner images are fixed on the printing paper. The printing paper is discharged to an FD tray 730 if the printing is single-side printing.

When a double-side printing mode is selected in advance, the printing paper passing through the fixing section 728 is conveyed to a double-side reversing unit not shown. The double-side reversing unit reverses the front and back sides of the printing paper, and conveys the reversed printing paper to a double-side conveying unit 731 positioned at a lower side of the transfer unit. The double-side conveying unit 731 conveys the printing paper to the regist rollers 722. Thereafter, a process similar to that of the single-side printing is carried out to the printing paper. The printing paper passes through the fixing section 728, and is discharged to the FD tray 730.

The image forming operation of the color printer is further explained in detail. A color image forming section includes image forming units for each color having the respective photoreceptor drums 725k, 725C, 725M, and 725Y, a charging roller, and a cleaner, and developing units. When the color printer starts an image formation, the photoreceptor drums 725k, 725C, 725M, and 725Y are rotated by a not-shown main motor, the electricity on each photoreceptor drum is removed with AC bias (having no DC component) applied to the charging roller, and the surface potential of each photoreceptor drum becomes a reference potential of approximately -50V.

Each of the photoreceptor drums 725k, 725C, 725M, and 725Y is uniformly charged to a potential substantially equivalent to a DC component by applying the charging roller with a DC bias superimposed with an AC bias. The surface potential is charged to about -500v to -7O0v. It is noted that a target charge potential is determined by a process controller. Image data as a print image transmitted from the controller 204 shown in Fig. 2 is converted into a laser-diode (LD) light emission signal of binary values for each color. Each LD light emission signal passes through a cylindrical lens, a polygon motor, an f θ lens, a first mirror to a third mirror, and a WTL lens, (writing unit 732), and is irradiated onto a corresponding one of the photoreceptor drums 725k, 725C, 725M, and 725Y. Based on this, the surface potential of the photoreceptor at the irradiated portion becomes approximately -50v, and an electrostatic latent image corresponding to the image information is formed.

In the developing process by each developing unit, each developing sleeve is applied with a DC of -300v to -500v superimposed with AC bias. Based on this, the electrostatic latent image corresponding to each color image data on each photoreceptor drum is developed to form a toner image (Q/M: -20µC/g to -30µC/g) at only the image portion where the potential is lowered based on the LD writing.

The printing paper is conveyed from the regist rollers 722 to the nip of the paper adsorption roller 724, and is adsorbed on the transfer belt 723. The toner image on each photoreceptor of each color formed in this way is transferred onto the printing paper with bias (i.e., the transfer bias) in the polarity opposite to the charge polarity of the toner applied to each of the transfer brushes 726K, 726C, 726M, and 726Y disposed opposite to the photoreceptor drums, with the transfer belt 723 sandwiched therebetween.

As explained above, in the printer 100 of the first embodiment, the white plane deciding section 105 decides whether an output of the image data is in the blank state by comparing the size of the compressed data 121 with the size of the compressed data for the image data in the blank state. Therefore, it is possible to decide whether the output of the image data is in the blank state without comparing the bitmap data obtained by bitmapping the image data with each other. As a result, it is possible to improve the efficiency and performance of the printing.

In the printer 100 of the first embodiment, the task scheduler 111 changes the priority order of the tasks based on a result of the decision made by the white plane deciding section 105 about whether the image data output is in the blank state. Therefore, it is possible to change the task processing order depending on the presence or absence of image data in the blank state. As a result, it is possible to improve the efficiency and performance of the printing.

A modification of the white plane decision processing:

In the white plane decision processing of the first embodiment, it is decided whether the image data is in the blank state by comparing the size of the compressed data with the size of the compressed data for the image data in the blank state. It is also possible to decide whether the image data is in the blank state based on the code of the compressed data.

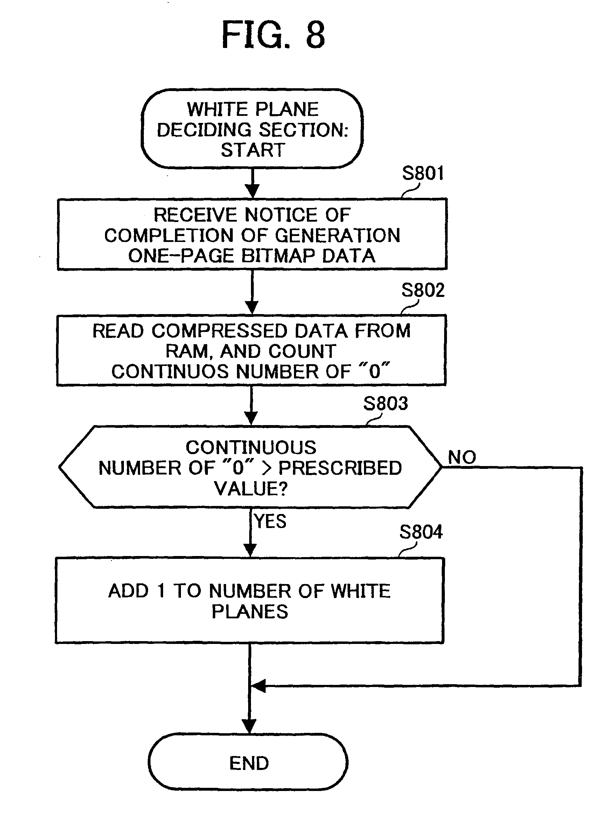

Fig. 8 shows a flowchart of another example of the procedure of the white plane decision processing performed by the white plane deciding section 105. The white plane deciding section 105 receives a notice of the completion of the generation of the one-page bitmap data from the image data expanding section 102 (step S801). The white plane deciding section 105 reads the size of the compressed data 121 for the image data stored in the image memory area 123, and counts a continuous number of code "0", the code "0" being other than a code that shows a drawing dot (step S802). The white plane deciding section 105 decides whether the continuous number of code "0" is at least a prescribed number, for example, a hundred thousand (step S803).

When the continuous number of code "0" is at least the prescribed number, the white plane deciding section 105 decides that the output image of the image data currently under the processing is a white plane in the blank state. The white plane deciding section 105 increases, by one, the number of white planes stored as global variables or stored as data in the RAM 120 (step S804). On the other hand, when the continuous number of code "0" is smaller than the prescribed number, the white plane deciding section 105 decides that the output image of the image data currently under the processing is not in the blank state, i.e., the output image is not a white plane. In this case, the white plane deciding section 105 does not increase the number of white planes.

It is possible to determine the prescribed value as an optional value. However, when the prescribed value is set to a high value, it is possible to improve the precision of the white plane decision.

It is also possible to arrange the image data as follows. The image data is divided into a plurality of bands, and the data is compressed. It is decided whether the compressed data of each band is white. When the compressed data of all the bands are white, it is decided that the image data is in the blank state. In this case, the compressed data of the white bands may be automatically generated at the time of the printing operation. Alternatively, the compressed data of the white bands may be prepared in advance before the printing operation, stored in the storing unit such as the RAM 120 or the HD, and retrieved from this storing unit.

A modification of the priority order changing processing:

The task scheduler 111 of the first embodiment decides whether the priority order of the tasks is to be changed based on the number of white planes. It is also possible to decide whether the priority order of the processing tasks is to be changed based on a remaining space of the image memory area.

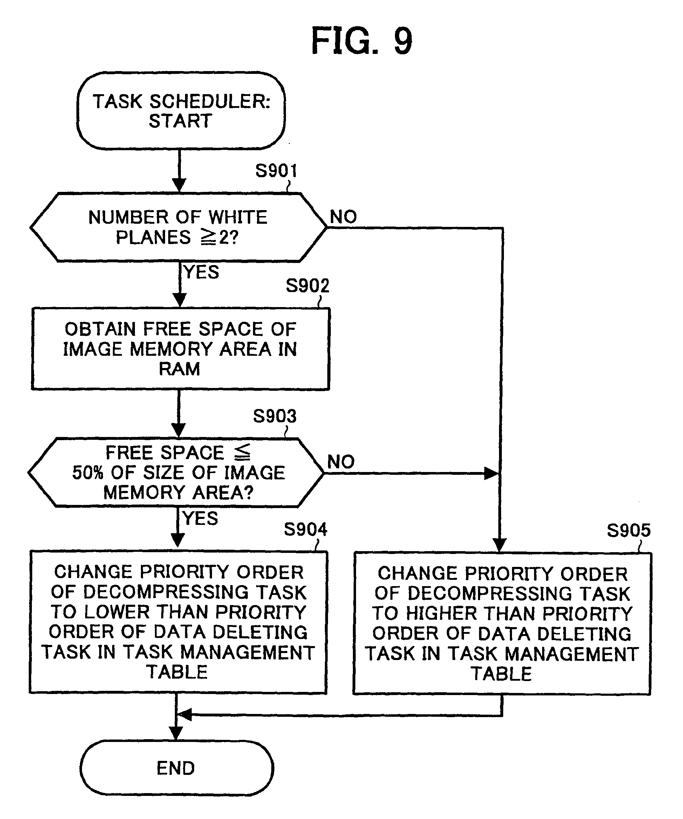

Fig. 9 shows a flowchart of another example of the procedure of the priority order changing processing performed by the task scheduler 111.

The task scheduler 111 decides whether the number of white planes set by the white plane deciding section 105 is at least two (step S901).

When there are at least two white planes, the task scheduler 111 further obtains a free space of the image memory area (step S902). On the other hand, when the number of white planes is smaller than two, the task scheduler 111 sets the priority order of the decompressing task to be higher than the priority order of the data deleting task (step S905).

After the processing at step S902, the task scheduler 111 decides whether the obtained free space is not larger than 50% of the total space of the image memory area 123 (step S903). When the obtained free space is not larger than 50%, the task scheduler 111 changes the task management table 125 so as to set the priority order of the decompressing task to be lower than the priority order of the data deleting task (step S904). On the other hand, when the obtained free space is larger than 50% of the total space of the image memory area 123, the task scheduler 111 changes the priority order of the decompressing task to be higher than the priority order of the data deleting task (step S905).

As explained above, by adding the free space of the image memory area 123 (i.e., the reception buffer) to a criterion of determination, it becomes possible to carry out the data deleting task with high priority according to the load of the subsequent image data (i.e., pages). As a result, it is possible to secure at an early stage a memory space that is necessary for the subsequent pages.

A second embodiment of this invention will be explained below.

In the printer 100 of the first embodiment, when it is decided whether the image data is in the blank state, the number of white planes, the processing task of which priority order is changed, and the priority order to be changed, are required and determined in advance. Further, the priority order is changed based on a result of the decision on white planes. On the other hand, in the printer 100 of the second embodiment, a user can set and determine the number of white planes, the task of which priority order is changed, the priority order to be changed, and whether the priority order is to be changed.

The functional configuration of the printer 100 of the second embodiment is similar to the functional configuration of the printer 100 of the first embodiment. The procedure of the decision processing performed by the white plane deciding section 105 is similar to that of the first embodiment.

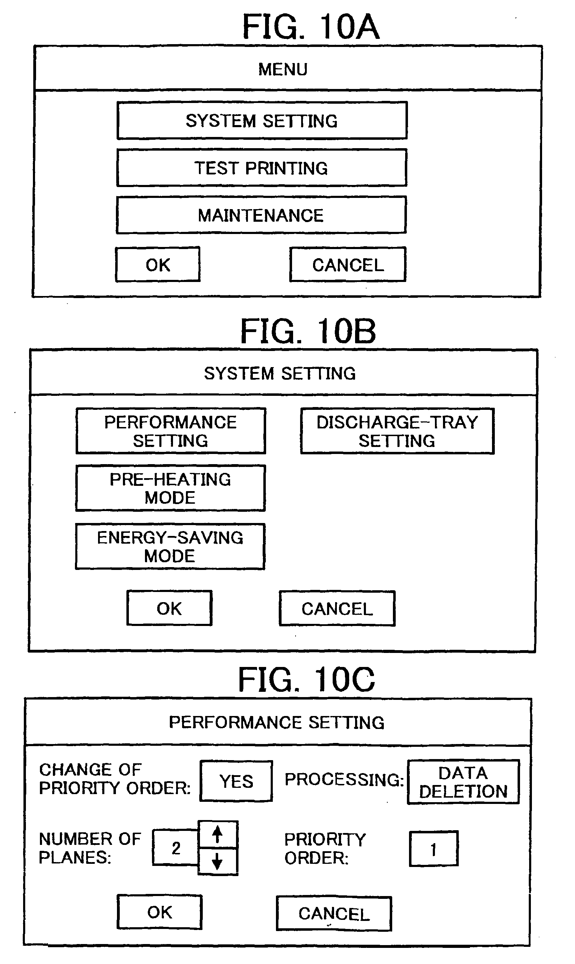

Fig. 10A shows a menu screen displayed on the operation panel 109, Fig. 10B shows a system setting screen, and Fig. 10C shows a performance setting screen.

The user specifies the number of white planes, the task of which priority order is changed, the priority order to be changed, and whether the priority order is to be changed, using the performance setting screen shown in Fig. 10C. When the user touches a "system setting" button displayed on the menu screen, the system setting screen shown in Fig. 10B is displayed. When the user next touches a "performance setting" button on this system setting screen, the performance setting screen is displayed on the operation panel 109. The parameter setting section 108 makes these screens displayed on the operation panel 109.

On the performance setting screen shown in Fig. 10C, a "change of priority order " button is used to specify whether the priority order is to be changed. When the user specifies "Yes", the change processing of the priority order is carried out. When the user specifies "No", the change processing is not carried out. The parameter setting section 108 stores this setting into the RAM 120 as setting data that indicates whether the priority order is to be changed or not.

A "number of planes" button is used to specify the number of white planes that becomes the basis of changing the priority order. It is possible to specify a value from 1 to n (where n is 10, for example). The parameter setting section 108 stores this setting into the RAM 120 as setting data that indicates the reference number n of white planes.

A "processing" button is used to specify a task of which priority order is to be changed. The parameter setting section 108 stores this setting into the RAM 120 as setting data that indicates the task. In Fig. 10C, one task is specified, but the menu may be arranged to be capable of specifying a plurality of tasks.

A "priority order" button is used to specify the priority order of the processing task that is specified through the "processing" button and changed thereafter. It is possible to specify a value from 1 to m (where m is 20, for example). The parameter setting section 108 stores this setting into the RAM 120 as setting data that indicates the priority order m.

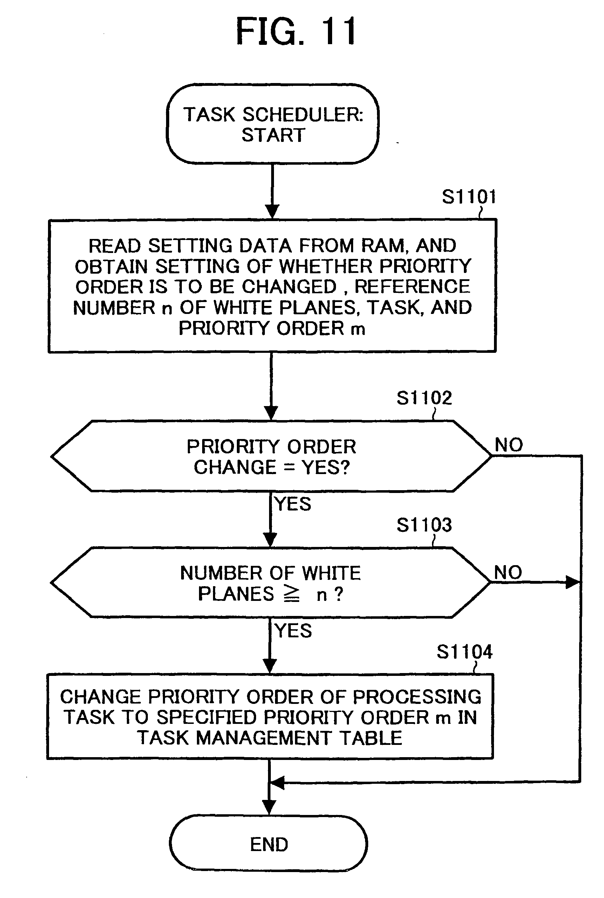

The priority order changing processing performed by the task scheduler 111 in the printer 100 of the second embodiment is explained next. Fig. 11 shows a flowchart of a procedure of the task changing processing performed by the task scheduler 111.

The task scheduler 111 reads the setting data stored in the RAM 120, and obtains the setting of whether the priority order is to be changed, the reference number n of white planes, the processing task, and the setting value of the priority order m (step S1101).

The task scheduler 111 decides whether the "Yes" indicating that the priority order is to be changed is specified (step S1102). When the "No" indicating that the priority order is not to be changed is specified, the task scheduler 111 ends the processing without changing the priority order of the tasks.

On the other hand, when the "Yes" is specified, the white plane deciding section 105 decides whether the set number of white planes is at least the reference number n of white planes (step S1103). When the set number of white planes is at least the reference number n of white planes, the task scheduler 111 changes the task management table 125 so as to set the priority order of the specified processing task to the specified priority order m (step S1104).

As explained above, in the printer 100 of the second embodiment, the user sets on the operation panel 109 the number of white planes, the processing task of.which priority order is changed, the priority order to be changed, and whether the priority order is to be changed. Based on the contents of the setting, the printer 100 carries out changing processing of the priority order. Therefore, it is possible to improve the efficiency and performance of the printing by taking into account the processing state of the printer 100 and the space of the image memory area 123.

Further, the performance setting menu of Fig. 10C is arranged so as to enable setting of a reference space of the image memory area that becomes a criterion of determination as to whether the priority order is to be changed. The task scheduler may change the priority order when the remaining space of the image memory area is not larger than the specified reference space.

As explained above, by setting the reference space for the free space of the image memory area to an optional level such as 75%, for example, it becomes possible to efficiently carry out the printing processing based on the space of image memory area and the memory space.

A third embodiment of this invention will be explained below.

The printer 100 of the first and the second embodiments changes the priority order of the tasks based on a result of the decision on whether the image data is in the blank state. On the other hand, a printer of the third embodiment carries out a charge processing based on a result of the decision made about whether the image data is in the blank state.

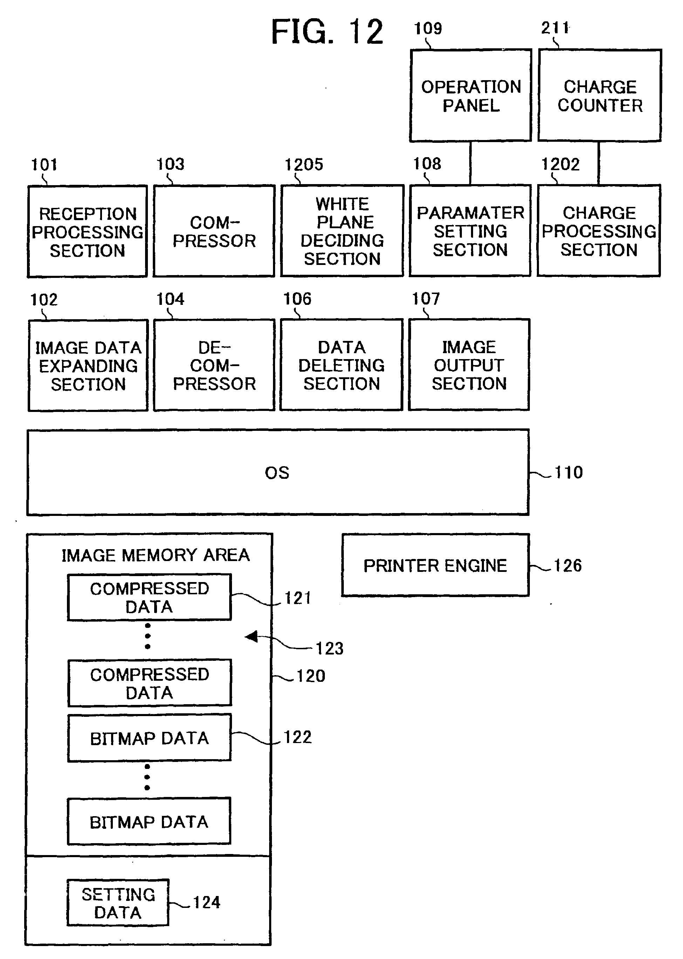

Fig. 12 shows a block diagram of a functional configuration of a printer 1200 according to the third embodiment. As shown in Fig. 12, the printer 1200 has a software configuration that mainly includes the reception processing section 101, the image data expanding section 102, the compressor 103, the decompressor 104, a white plane deciding section 1205, the data deleting section 106, the image output section 107, the parameter setting section 108, a charge processing section 1202, and the OS 110 that controls the basic operation of the printer.

The printer 1200 of the third embodiment has a hardware configuration that mainly includes the operation panel 109, the RAM 120, and the printer engine 126 like the first embodiment, and further includes the charge counter 211. The charge processing section 1202 and the charge counter 211 are formed detachably as a charge counting device.

The charge counter 211 is a module that manages counting for charge. The charge counter 211 may be configured with hardware or software.

The reception processing section 101, the image data expanding section 102, the compressor 103, the decompressor 104, the data deleting section 106, the image output section 107, the parameter setting section 108, the RAM 120, the printer engine 126, and the operation panel 109 have the same configurations as those of the first embodiment, respectively.

The white plane deciding section 1205 decides whether a white plane exists based on presence or absence of drawing dots in the bitmap data, by comparing a size of the compressed data with a minimum size of a compression algorithm converted from a size of the data before the compression. The white plane deciding section 1205 is different from the white plane deciding section 105 of the first embodiment in that the white plane deciding section 1205 gives a decision result in a white plane flag.

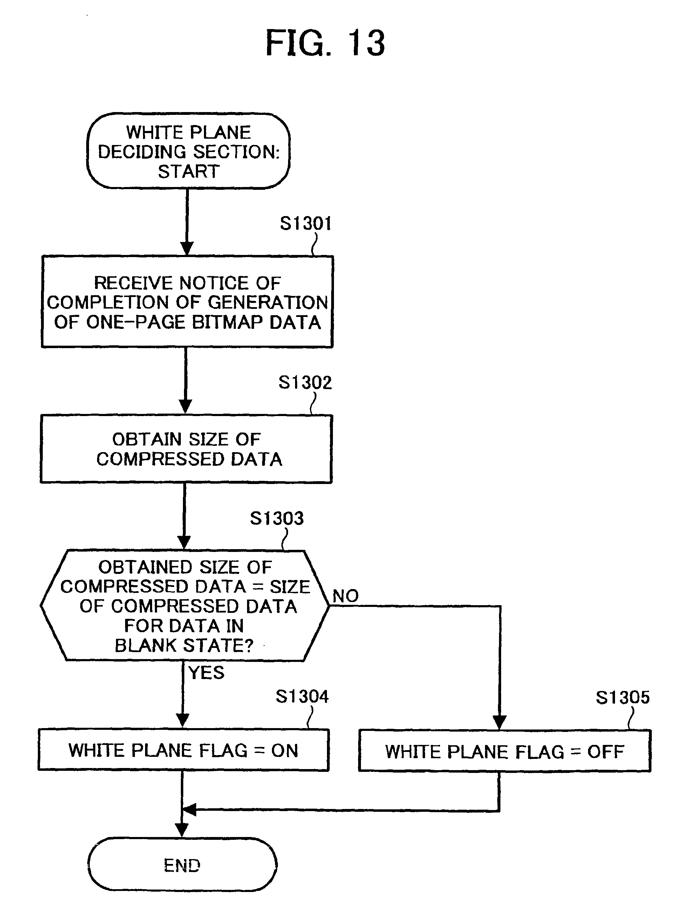

Fig. 13 shows a flowchart of a procedure of the white plane decision processing performed by the white plane deciding section 1205. The white plane deciding section 1205 receives a notice of the completion of the generation of the one-page bitmap data from the image data expanding section 102 (step S1301), and obtains the size of the compressed data 121 of the image data stored in the image memory area 123 (step S1302). The white plane deciding section 1205 compares the size of the compressed data for the image data in the blank state with the size of the obtained compressed data 121 (step S1303). In other words, the white plane deciding section 1205 compares the size of the obtained compressed data with the minimum size of a compression algorithm converted from the size of the data before the compression. The size of the compressed data in the blank state used for this comparison may be automatically generated at the time of the printing operation. Alternatively, this size may be prepared in advance before the printing operation, stored in the RAM 120 or the like, and retrieved from this RAM 120. It is also possible to decide whether the image data is in the blank state by comparing all the compressed data for the image data in the blank state with compression code. In this case, the compressed data in the blank state may be automatically generated at the time of the printing operation. Alternatively, the compressed data in the blank state may be prepared in advance before the printing operation, stored in the storing unit such as the RAM 120 or the HD, and retrieved from this storing unit.

When both sizes are equal, the white plane deciding section 1205 decides that the output image of the image data currently under the processing is a white plane in the blank state. The white plane deciding section 1205 sets a flag of the white plane (where an initial value is OFF) stored as global variables or stored as data in the RAM 120 to ON (step S1304). This white plane flag is referred to in the charge processing to be described later. On the other hand, when the obtained size is not equal to the size of the compressed data for the image data in the blank state, the white plane deciding section 1205 decides that the output image of the image data currently under the processing is not in the blank state, i.e., the output image is not a white plane. In this case, the white plane deciding section 1205 sets the white plane flag (where the initial value is OFF) to OFF (step S1305).

The charge processing performed by the charge processing section 1202 is explained below. Conventionally, each time when the bitmap data is drawn and printed onto one sheet of printing paper, the charge counter 211 is counted (usually incremented by one). However, the charge counting device in the printer of the third embodiment does not count up, when there is no information concerning the bitmap data drawn onto the printing paper and accordingly one sheet is a white sheet (i.e., a blank sheet having no data to be drawn thereon).

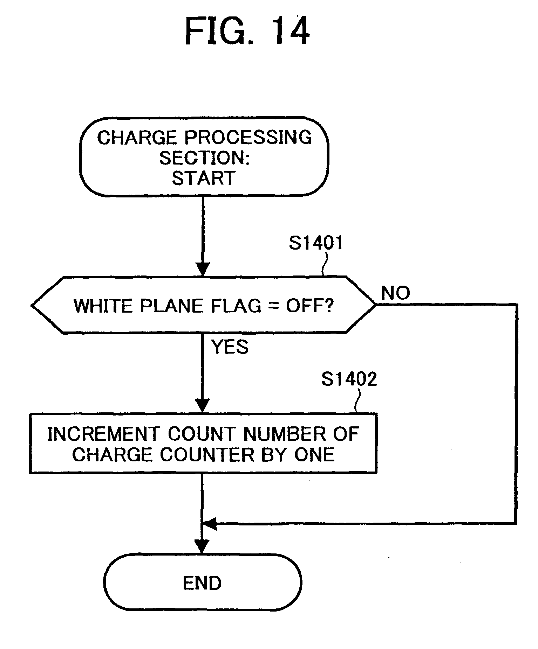

Fig. 14 shows a flowchart of a procedure of the charge processing performed by the charge processing section 1202. The charge processing section 1202 decides whether the white plane flag set by the white plane deciding section 1205 is OFF (step S1401). When the white plane flag is OFF, the charge processing section 1202 decides that the image data currently under the processing is not in the blank state, and increments the count number of the charge counter 211 by one. On the other hand, when the white plane flag is ON, the charge processing section 1202 decides that the image data currently under the processing is in the blank state, and therefore does not increment the count number of the charge counter 211.

As explained above, the printer 1200 of the third embodiment can decide whether the bitmap data is blank, without the need for comparing all the bitmap data. As a result, it is possible to improve the printing speed and carry out counting for accurate charge.

In the above embodiment, an ordinary printer that carries out the printing of two colors of black and white (hereinafter referred to as a monochromatic printer) is explained. A printer that carries out a color printing (hereinafter referred to as a color printer) executes the following processing.

An ordinary color printer (e.g., a laser printer) reproduces full colors of a printing image by using four colors of cyan (C), magenta (M), yellow (Y), and black (K). Frequently, an inkjet printer uses additional colors to obtain colors of halftones. In these cases, the printer usually has the charge counters 211 corresponding to the number of these colors. Some printers have a charge counter that charges based on the number of colors such as a case of using one color and a case of using two colors. Any kind of charge counter may be used.

When receiving color image data output, based on a printing instruction from the host computer 203, the color printer interprets the generated image data based on a corresponding printer language, and expands the data into a bit map to generate bitmap data for each plane of each color.

In order to effectively utilize the image memory area 123 like in the above-described embodiment, the color printer compresses the bitmap data for each plane, and stores the compressed bitmap data in the image memory area 123. When the color printer is a page printer, the printer decompresses the stored compressed data as soon as the bitmap data for one page is ready. The printer engine starts the printing processing.

The charge counter 211 of the color printer may be provided for each plane, and any kind of charge counter may be used.

The color printer generates bitmap data for each plane of each color, and combines these bitmap data, thereby to print a full color image onto a sheet of printing paper. The charge counter 211 for each plane needs to decide about which color plane is used, at the time of printing the image onto a sheet of printing paper. For the charging operation, like in the monochromatic printer of the above embodiment, the color printer generates in advance a white paper compression code of the image data that indicates a blank state. When the compression of the bitmap data for each plane has been completed, the color printer compares the compression code for each plane of the bitmap data to be printed with the white paper compression code that indicates a blank state. Only when the compression codes are not equal, the charge counter of the corresponding plane is counted. Further, when a charge counter is provided for each plane, the charge counter of the corresponding plane is counted.

Depending on the charging mode, a plurality of charge counters are provided. The printer compares a compression code of the bitmap data with a white paper compression code indicating the blank state, for each plane. The printer temporarily stores the plane when the compression codes are not equal, and counts up the corresponding charge counter among the charge counters based on the result. For example, when a print output of image data having a mixture of white and black and colors is charged, it is possible to carry out an exact charging according to the print output, for example, the number of white and black printed sheets and the number of color printed sheets such as two colors. Therefore, it is possible to carry out a high-speed printing even when such an exact charge processing is carried out.

As explained above, like in the monochromatic printer, the color printer can decide whether the bitmap data is blank (i.e., white plain) without the need for comparing all the pixels of the bitmap data with the pixels of the white plane. As a result, it is possible to improve the printing speed and carry out an accurate charge counting.

While the printer is used as an example of the image formation apparatus in the first to the third embodiments, it is also possible to apply the present invention to a copier and a facsimile unit, or a multi-functional device that accommodates functions of a printer, a copier, a facsimile, and a scanner into one casing.

As explained above, according to one aspect of the present invention, it is possible to decide whether image data is in the blank state without comparing all pixels of bitmap data obtained by bitmapping the image data with pixels of the white plane. Therefore, it is advantageously possible to improve the efficiency and performance of the printing.

Moreover, it is possible to decide whether image data is in the blank state without comparing all pixels of bitmap data obtained by bitmapping the image data with pixels of the white plane if the size of the compressed data is known. Therefore, it is advantageously possible to improve the efficiency and performance of the printing.

Furthermore, it is possible to decide whether image data is in the blank state without comparing all the codes of the compressed data with each other. Therefore, it is advantageously possible to improve the efficiency and performance of the printing.

Moreover, it is advantageously possible to accurately decide whether the output of image data is in the blank state.

Furthermore, it is possible to change a task processing order depending on presence or absence of image data in the blank state. Therefore, it is advantageously possible to improve the efficiency and performance of the printing.

Moreover, when the blank state continues in pages of which output is requested, the task of deleting the printed page is preferentially performed because this task has a high priority order. Consequently, it is possible to secure at an early stage a memory that is necessary for the subsequent pages. Therefore, it is advantageously possible to improve the efficiency and performance of the printing.

Furthermore, it is possible to freely change the number of pages in which the blank state continues, the blank state being a reference for changing the priority order. Therefore, it is advantageously possible to improve the efficiency and performance of the printing based on the image data to be printed.

Moreover, it is possible to efficiently decide whether color image data is in the blank state. Therefore, it is advantageously possible to improve the efficiency and performance of the printing.

Furthermore, it is possible to change the priority order of the tasks by taking into account a remaining space of the image memory area. Therefore, it is advantageously possible to improve the efficiency and performance of the printing based on the space of the image memory area.

Moreover, it is possible to increase a free space when there is a small amount of remaining space of the image memory area. Therefore, it is advantageously possible to improve the efficiency and performance of the printing.

Furthermore, it is possible to freely change a reference space according to a total space of the image memory area. Therefore, it is advantageously possible to improve the efficiency and performance of the printing based on the total space of the image memory area.

Moreover, it is possible to avoid a uniform changing of the priority order of the tasks depending on whether image data is in the blank state. A user can determine whether the priority order of the tasks is to be changed based on a processing state of the image formation apparatus. Therefore, it is advantageously possible to improve the efficiency and performance of the printing by taking into account the processing state of the image formation apparatus.

Furthermore, it is possible to execute tasks in a desired priority order. Therefore, it is advantageously possible to improve the efficiency and performance of the printing by taking into account the processing state of the image formation apparatus.

Moreover, it is advantageously possible to carry out an accurate charge processing even when a printing output is in the blank state.

Furthermore, it is advantageously possible to carry out an accurate charge processing even when a printing output is in the blank state, by excluding the pages in the blank state.

According to another aspect of the present invention, it is advantageously possible to carry out an accurate charge processing even when a printing output is in the blank state, by excluding the pages in the blank state.

According to still another aspect of the present invention, the priority order of the tasks that operate on the image formation apparatus is changed based on a result of the decision made at a deciding step. Consequently, it is possible to change the task processing order based on presence or absence of image data in the blank state. Therefore, it is advantageously possible to improve the efficiency and performance of the printing.

According to still another aspect of the present invention, it is advantageously possible to carry out an accurate charge processing even when a printing output is in the blank state.

According to still another aspect of the present invention, it is possible to change the task processing order based on presence or absence of image data in the blank state. Therefore, it is advantageously possible to improve the efficiency and performance of the printing.

According to still another aspect of the present invention, it is advantageously possible to carry out an accurate charge processing even when a printing output is in the blank state.

The present document incorporates by reference the entire contents of Japanese priority document, 2002-051660 filed in Japan on February 27, 2002, 2002-082431 filed in Japan on March 25, 2002, 2002-347920 filed in Japan on November 29, 2002 and 2003-022739 filed in Japan on January 30, 2003.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. An image formation apparatus comprising:
a compressing unit (103) for converting image data comprising at least one bitmap plane to be output to obtain bitmap data, and for compressing the bitmap data bitmap plane by bitmap plane to generate compressed data;
a deciding unit (105) for deciding whether a bitmap plane or the image data is in a blank state, based on information about the compressed data generated by the compressing unit; and
a processing unit (110) for image formation processing based on result of the decision made by the deciding unit, **characterised in that**:
the deciding unit is arranged to compare a size of a bitmap plane of the compressed data with a size of compressed data obtained by compressing a bitmap plane which when printed is blank state, and to decide that the out put of the image data is in the blank state when both sizes coincide with each other; and
the processing unit includes a task managing unit (111) for changing a priority order of print processing tasks that operate on the image formation apparatus, based on a result of the decision made by the deciding unit.

2. An image formation apparatus according to claim 1,
wherein the task managing unit (111) is arranged to change the priority order of a data deleting task to be higher than the priority order of other tasks when the image data continues by at least a predetermined reference number of planes, when that image data is the image data whose output state is being decided by the deciding unit as the blank state.

3. An image formation apparatus according to claim 2, further comprising a plane number setting unit arranged to set the reference number of planes.

4. The image formation apparatus according to claim 2 or 3,
wherein the task managing unit (111) is arranged to change the priority order of the data deleting task based on a remaining space of an image memory area that stores further received image data.

5. The image formation apparatus according to claim 4,
wherein the task managing unit (111) is arranged to change the priority order of the data deleting task to be higher when the remaining space of the image memory area that stores received image data is equal to or less than a predetermined reference space.

6. The image formation apparatus according to claim 5, further comprising a reference space unit arranged to set the reference space.

7. The image formation apparatus according to any one of claims 1 to 6, further comprising a priority order change setting unit arranged to set whether it is possible to change the priority order of the tasks,
wherein the task managing unit (111) is arranged to change the priority order of the tasks, when the priority order change setting unit has set that it is possible to change the priority order.

8. The image formation apparatus according to any one of claims 1 to 7, further comprising a priority order setting unit for setting the priority order of the tasks,
wherein the task managing unit is further arranged to change the priority order of the tasks to the priority order set by the priority order setting unit.

9. The image formation apparatus according to any one of the preceding claims,
wherein the compressing unit is arranged to convert color image data two be output to obtain bitmap data, and to compress the bitmap data to generate compressed data.

10. The image formation apparatus according to any one of the preceding claims, wherein the processing unit includes a charge processing unit (211) for counting a number of output sheets to charge for an image output, based on a result of the decision made by the deciding unit.

11. The image formation apparatus according to claim 10,
wherein the charge processing unit is arranged to count the number of output sheets only when the deciding unit decides that the image data is not in the blank state.

12. An image formation method comprising the steps of:
converting image data to be output to obtain at least one bitmap plane, and compressing the or each bitmap plane to generate compressed data;
deciding whether an output of the image data is in a blank state, based on information about the compressed data generated at the step of compressing; and
changing a priority order of tasks that operate on an image formation apparatus based on a result of the decision made at the step of deciding; **characterised in that** it comprises the steps of:
deciding whether an output of the image data is a blank state comprises comparing a size of the compressed data obtained by compressing a bitmap plane which when printed is blank, and deciding that the output of the image data is in the blank state when both sizes coincide with each other; and
changing a priority order of print processing tasks based on a result of the decision.

13. An image formation program comprising code means that, when executed by a computer, instructs the computer to perform the steps of claim 12.

## Patentansprüche

1. Bilderzeugungsvorrichtung, die umfasst:
eine Kompressionseinheit (103), um Bilddaten, die wenigstens eine auszugebende Bitmap-Ebene enthalten, umzusetzen, um Bitmap-Daten zu erhalten, und um die Bitmap-Daten Bitmap-Ebene für Bitmap-Ebene zu komprimieren, um komprimierte Daten zu erzeugen;
eine Entscheidungseinheit (105), um anhand von Informationen über die durch die Kompressionseinheit erzeugten komprimierten Daten zu entscheiden, ob eine Bitmap-Ebene der Bilddaten in einem Leerzustand ist; und
eine Verarbeitungseinheit (110), um anhand eines Ergebnisses der durch die Entscheidungseinheit getroffenen Entscheidung eine Bilderzeugungsverarbeitung auszuführen, **dadurch gekennzeichnet, dass**
die Entscheidungseinheit dazu ausgelegt ist, eine Größe einer Bitmap-Ebene der komprimierten Daten mit einer Größe komprimierter Daten, die durch Komprimieren einer Bitmap-Ebene, die, wenn sie gedruckt wird, im Leerzustand ist, erhalten werden, zu vergleichen und zu entscheiden, dass die Ausgabe der Bilddaten im Leerzustand ist, wenn beide Größen miteinander übereinstimmen; und
die Verarbeitungseinheit eine Aufgabenmanagement-Einheit (111) umfasst, um anhand eines Ergebnisses der durch die Entscheidungseinheit getroffenen Entscheidung eine Prioritätsreihenfolge von Druckverarbeitungsaufgaben, die in der Bilderzeugungsvorrichtung ausgeführt werden, zu ändern.

2. Bilderzeugungsvorrichtung nach Anspruch 1,
wobei die Aufgabenmanagement-Einheit (111) dazu ausgelegt ist, die Prioritätsreihenfolge einer Datenlöschaufgabe so zu ändern, dass sie höher ist als die Prioritätsreihenfolge anderer Aufgaben, wenn die Bilddaten durch wenigstens eine vorgegebene Referenzanzahl von Ebenen fortgesetzt werden, wenn jene Bilddaten die Bilddaten sind, in Bezug auf deren Ausgabezustand die Entscheidungseinheit entscheidet, dass er der Leerzustand ist.

3. Bilderzeugungsvorrichtung nach Anspruch 2, die ferner eine Ebenenanzahl-Einstelleinheit umfasst, die dazu ausgelegt ist, die Referenzanzahl von Ebenen einzustellen.

4. Bilderzeugungsvorrichtung nach Anspruch 2 oder 3,
wobei die Aufgabenmanagement-Einheit (111) dazu ausgelegt ist, die Prioritätsreihenfolge der Datenlöschaufgabe anhand eines verbleibenden Raums eines Bildspeicherbereichs, der weitere empfangene Bilddaten speichert, zu ändern.

5. Bilderzeugungsvorrichtung nach Anspruch 4,
wobei die Aufgabenmanagement -Einheit (111) dazu ausgelegt ist, die Prioritätsreihenfolge der Datenlöschaufgabe so zu ändern, dass sie höher ist, wenn der verbleibende Raum des Bildspeicherbereichs, der empfangene Bilddaten speichert, gleich oder kleiner als ein vorgegebener Referenzraum ist.

6. Bilderzeugungsvorrichtung nach Anspruch 5, die ferner eine Referenzraumeinheit umfasst, die dazu ausgelegt ist, den Referenzraum einzustellen.

7. Bilderzeugungsvorrichtung nach einem der Ansprüche 1 bis 6, die ferner eine Prioritätsreihenfolgenänderungs-Einstelleinheit umfasst, die dazu ausgelegt ist, einzustellen, ob es möglich ist, die Prioritätsreihenfolge der Aufgaben zu ändern,
wobei die Aufgabenmanagement-Einheit (111) dazu ausgelegt ist, die Prioritätsreihenfolge der Aufgaben zu ändern, wenn die Prioritätsreihenfolgenänderungs-Einstelleinheit eingestellt hat, dass es möglich ist, die Prioritätsreihenfolge zu ändern.

8. Bilderzeugungsvorrichtung nach einem der Ansprüche 1 bis 7, die ferner eine Prioritätsreihenfolgen-Einstelleinheit umfasst, um die Prioritätsreihenfolge der Aufgaben einzustellen,
wobei die Aufgabenmanagement-Einheit ferner dazu ausgelegt ist, die Prioritätsreihenfolge der Aufgaben zu der Prioritätsreihenfolge zu ändern, die durch die Prioritätsreihenfolgen-Einstelleinheit eingestellt wird.

9. Bilderzeugungsvorrichtung nach einem der vorhergehenden Ansprüche,
wobei die Kompressionseinheit dazu ausgelegt ist, auszugebende Farbbilddaten umzusetzen, um Bitmap-Daten zu erhalten, und die Bitmap-Daten zu komprimieren, um komprimierte Daten zu erzeugen.

10. Bilderzeugungsvorrichtung nach einem der vorhergehenden Ansprüche, wobei die Verarbeitungseinheit eine Beladungsverarbeitungseinheit (211) enthält, um anhand eines Ergebnisses der durch die Entscheidungseinheit getroffenen Entscheidung eine Anzahl von Ausgabeblättern zu zählen, die für eine Bildausgabe geladen werden sollen.

11. Bilderzeugungsvorrichtung nach Anspruch 10,
wobei die Beladungsverarbeitungseinheit dazu ausgelegt ist, die Anzahl von Ausgabeblättern nur dann zu zählen, wenn die Entscheidungseinheit entscheidet, dass die Bilddaten nicht im Leerzustand sind.

12. Bilderzeugungsverfahren, das die folgenden Schritte umfasst:
Umsetzen von auszugebenden Bilddaten, um wenigstens eine Bitmap-Ebene zu erhalten, und Komprimieren der oder jeder Bitmap-Ebene, um komprimierte Daten zu erzeugen;
Entscheiden, ob eine Ausgabe der Bilddaten in einem Leerzustand ist, anhand von Informationen über die komprimierten Daten, die im Kompressionsschritt erzeugt werden; und
Ändern einer Prioritätsreihenfolge von Aufgaben, die in einer Bilderzeugungsvorrichtung ausgeführt werden, anhand eines Ergebnisses der im Entscheidungsschritt getroffenen Entscheidung; **dadurch gekennzeichnet, dass** es die folgenden Schritte umfasst:
in dem Schritt des Entscheidens, ob eine Ausgabe der Bilddaten im Leerzustand ist, Vergleichen einer Größe der komprimierten Daten, die durch Komprimieren einer Bitmap-Ebene erhalten werden, die, wenn sie gedruckt wird, leer ist, und Entscheiden, dass die Ausgabe der Bilddaten im Leerzustand ist, wenn beide Größen miteinander übereinstimmen; und
Ändern einer Prioritätsreihenfolge von Druckverarbeitungsaufgaben anhand eines Ergebnisses der Entscheidung.

13. Bilderzeugungsprogramm, das Codemittel enthält, die dann, wenn sie von einem Computer ausgeführt werden, den Computer anweisen, die Schritte nach Anspruch 12 auszuführen.

## Revendications

1. Appareil de formation d'image comprenant :
une unité de compression (103) pour convertir des données d'image comprenant au moins un plan bitmap à délivrer pour obtenir des données bitmap, et pour compresser les données bitmap, plan bitmap par plan bitmap, pour générer des données compressées ;
une unité de décision (105) pour décider si un plan bitmap des données d'image est dans un état vierge, sur la base d'informations concernant les données compressées générées par l'unité de compression ; et
une unité de traitement (110) pour effectuer un traitement de formation d'image sur la base d'un résultat de la décision prise par l'unité de décision, **caractérisé en ce que** :
l'unité de décision est agencée pour comparer une taille d'un plan bitmap des données compressées avec une taille des données compressées obtenues en compressant un plan bitmap qui, lorsqu'il est imprimé, est dans un état vierge, et pour décider que la sortie des données d'image est dans l'état vierge lorsque les deux tailles coïncident l'une avec l'autre ; et
l'unité de traitement comprend une unité de gestion des tâches (111) pour modifier un ordre de priorité des tâches de traitement d'impression qui s'effectuent sur l'appareil de formation d'image, sur la base d'un résultat de la décision prise par l'unité de décision.

2. Appareil de formation d'image selon la revendication 1,
dans lequel l'unité de gestion des tâches (111) est agencée pour modifier l'ordre de priorité d'une tâche de suppression de données pour qu'il soit supérieur à l'ordre de priorité des autres tâches lorsque les données d'image continuent par au moins un nombre de plans de référence prédéterminé, lorsque ces données d'image sont les données d'image dont l'état de sortie est déterminé par l'unité de décision comme étant l'état vierge.

3. Appareil de formation d'image selon la revendication 2, comprenant en outre une unité de détermination de nombre de plans agencée pour déterminer le nombre de plans de référence.

4. Appareil de formation d'image selon la revendication 2 ou 3,
dans lequel l'unité de gestion des tâches (111) est agencée pour modifier l'ordre de priorité de la tâche de suppression de données sur la base d'un espace restant d'une zone de mémoire d'image qui mémorise d'autres données d'image reçues.

5. Appareil de formation d'image selon la revendication 4,
dans lequel l'unité de gestion des tâches (111) est agencée pour modifier l'ordre de priorité de la tâche de suppression de données pour qu'il soit plus élevé lorsque l'espace restant de la zone de mémoire d'image qui mémorise les données d'image reçues est égal ou inférieur à un espace de référence prédéterminé.

6. Appareil de formation d'image selon la revendication 5, comprenant en outre une unité d'espace de référence pour déterminer l'espace de référence.

7. Appareil de formation d'image selon l'une quelconque des revendications 1 à 6, comprenant en outre une unité de détermination de changement d'ordre de priorité agencée pour déterminer s'il est possible de modifier l'ordre de priorité des tâches,
dans lequel l'unité de gestion des tâches (111) est agencée pour modifier l'ordre de priorité des tâches lorsque l'unité de détermination de changement d'ordre de priorité a déterminé qu'il est possible de modifier l'ordre de priorité.

8. Appareil de formation d'image selon l'une quelconque des revendications 1 à 7, comprenant en outre une unité de détermination d'ordre de priorité pour déterminer l'ordre de priorité des tâches,
dans lequel l'unité de gestion des tâches est en outre agencée pour modifier l'ordre de priorité des tâches en l'ordre de priorité déterminé par l'unité de détermination d'ordre de priorité.

9. Appareil de formation d'image selon l'une quelconque des revendications précédentes,
dans lequel l'unité de compression est agencée pour convertir des données d'image couleur à délivrer pour obtenir des données bitmap, et pour compresser les données bitmap pour générer des données compressées.

10. Appareil de formation d'image selon l'une quelconque des revendications précédentes, dans lequel l'unité de traitement comprend une unité de traitement de chargement (211) pour compter un nombre de feuilles de sortie à charger pour une sortie d'image, sur la base d'un résultat de la décision prise par l'unité de décision.

11. Appareil de formation d'image selon la revendication 10,
dans lequel l'unité de traitement de chargement est agencée pour ne compter le nombre de feuilles de sortie que lorsque l'unité de décision décide que les données d'image ne sont pas dans l'état vierge.

12. Procédé de formation d'image comprenant les étapes consistant à :
convertir des données d'image à délivrer pour obtenir au moins un plan bitmap, et compresser le ou chaque plan bitmap pour générer des données compressées ;
décider si une sortie des données d'image est dans un état vierge, sur la base d'informations concernant les données compressées générées à l'étape de compression ; et
modifier un ordre de priorité des tâches qui s'effectuent sur un appareil de formation d'image sur la base d'un résultat de la décision prise à l'étape de décision ; **caractérisé en ce qu'**il comprend les étapes consistant à :
décider si une sortie des données d'image est dans un état vierge, cette étape consistant à comparer une taille des données compressées obtenues en compressant un plan bitmap qui, lorsqu'il est imprimé est vierge, et décider que la sortie des données d'image est dans l'état vierge lorsque les deux tailles coïncident l'une avec l'autre, et
modifier un ordre de priorité des tâches de traitement d'impression sur la base d'un résultat de la décision.

13. Programme de formation d'image comprenant des moyens formant code qui, lorsqu'ils sont exécutés par un ordinateur, ordonnent à l'ordinateur d'effectuer les étapes de la revendication 12.
